(19) Europäisches Patentamt / European Patent Office / Office européen des brevets

(11) **EP 4 134 889 A1**

(12) **EUROPEAN PATENT APPLICATION**

(43) Date of publication:
**15.02.2023 Bulletin 2023/07**

(21) Application number: **21190814.0**

(22) Date of filing: **11.08.2021**

(51) International Patent Classification (IPC):
**G06Q 10/08** (2012.01)

(52) Cooperative Patent Classification (CPC):
**G06Q 10/087**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Implement Consulting Group P/S 2900 Hellerup (DK)**

(72) Inventor: **Holm, Thomas Georg Nellemann 2920 Charlottenlund (DK)**

(74) Representative: **Plougmann Vingtoft a/s Strandvejen 70 2900 Hellerup (DK)**

Remarks:
The application is published incomplete as filed (Rule 68(1) EPC).

(54) **A METHOD AND A SYSTEM FOR CUSTOMER DEMAND DRIVEN SUPPLY CHAIN PLANNING**

(57) The invention relates to a computer-implemented MRP method for controlling materials in a supply chain (SC) with customer segments (CS1, CS2). The invention is advantageous in that there is calculated a safety stock curve (SSC) in a time-phased manner (m, n) to cover an uncertainty until a demand is fulfilled based on customer data (CD) and material data (MD). The time until demand is fulfilled is a demand fulfilment time (DFT), the safety stock curve (SSC) being calculated as a function of this demand fulfilment time (DFT) in order to meet specified target service level (TSL1, TSL2) and simultaneously minimize inventory levels in said plurality of distribution centres (M_DC, DC2). The invention provides advances in MRP with respect to an optimum with demand compliance to required service levels while not unnecessarily increasing safety stock levels. Simulations convincingly demonstrate the effects of the invention.

SC 100:

FIG. 2A

EP 4 134 889 A1

**Description**

FIELD OF THE INVENTION

The present invention relates to a computer-implemented method for end-to-end demand material requirements planning (MRP) and a corresponding computer system. The invention is suitable for being implemented in various supply chain planning systems, where the supply chain planning system must respond to changing demand in the supply chain in due time with sufficient buffers. The invention can also be implemented in a supply and inventory planning system in combination with an enterprise resource planning (ERP) system.

BACKGROUND OF THE INVENTION

More or less all organisations in the economy are dependent on some degree of supply chain management i.e. the control of material flow from suppliers of raw material to customer segments. The resources spent on inventories and raw materials are quite significant and are accordingly an important goal of optimisation.

Scientific methods and tools based on the information technology coupling various stages of the supply chain have recently provided automated and effective inventory control techniques based on advanced and complex decision models. However, several conflicting goals still have to be met at the same time; on one hand the stock levels should be kept down, on the other hand production may be optimized if large batches are manufactured, and similarly a high stock level may facilitate a corresponding high service level i.e. delivery of the required material or products in due time to the various customer segments. For a detailed introduction to MRP and inventory control, the skilled reader is referred to for example the textbook Inventory Control by Sven Axsater, Springer Science+ Business Media, 2006.

Some solutions have a simple reorder point, where each stock point is optimized independently. The reorder point is then updated by an inventory settings process e.g., monthly. Other solutions have forecasting driven MRP, where statistical models are used to calculate future dependent requirements on a primary distribution centre.

Yet other solutions known as multi-echelon inventory methods operate in a way, where the stock points in the supply chain are simultaneously optimized. The safety stocks are then updated by an inventory settings process with an e.g., monthly frequency. One disadvantage with these methods is that often contra-intuitive results with "artificial" service levels are applied. Service levels can for example be increased downstream and lowered midstream. These "artificial" service levels are also hard to control in execution especially when the constraints emerge and disruptions occur. Another disadvantage with multi-echelon inventory methods is that the difficulty to handle large order sizes that often create so-called lumpy upstream demand.

All the above methods are based on traditional safety stock calculation i.e., the safety stock is calculated to cover the demand uncertainty during lead time and supply lead time uncertainty.

Forecasting driven MRP in particular has a disadvantage that is known as MRP 'nervousness'. MRP nervousness is the term used to describe how small demand changes create significant upstream changes - also known as noise. This noise creates a ripple of changes that are hard to understand - and creates therefore problems for the planners using the results of the planning.

One solution to this nervousness in MRP may be found in US patent application US 2007/0192213 (to General Motors), which provides a solution to this so-called noise problem. Briefly, the inventory planning model is determined based on certain input. A performance monitor measures the parts supply chain and provides performance metrics. The movement of parts through the parts supply chain is also monitored by a supply chain visibility system that keeps track of actual supply chain conditions. The feedback from the feedback filter is sent to a feedback controller. Based on the feedback information and the input, the feedback controller adjusts the input of the inventory planning model while determining how frequently the inventory planning model is calibrated, and how the inventory planning model is calibrated. A threshold value can particularly be specified so that the nervousness or noise can be avoided in exceptional situations. However, this solution does effectively not solve the MRP nervousness problem in general, but merely mitigates the nervousness problem in this particular setup by recalibration with a threshold value.

Hence, an improved method for performing MRP would be advantageous, and in particular a more efficient and/or reliable MRP method would be advantageous.

OBJECT OF THE INVENTION

It is a further object of the present invention to provide an alternative to the prior art.

In particular, it may be seen as an object of the present invention to provide a MRP method that solves the above mentioned problems of the prior art with nervousness and/or noise in MRP.

## SUMMARY OF THE INVENTION

Thus, the above-described object and several other objects are intended to be obtained in a first aspect of the invention by providing a computer-implemented MRP method for controlling materials in a supply chain, the method comprising:

- receiving customer data (CD) related to a plurality of customer segments (CS1, CS2) and the corresponding demand from each customer segment, each customer segment having a specified target service level (TSL1, TSL2),

- receiving material data (MD) related to a plurality of distribution centres (M_DC, DC2, DC3, DC4) related to the amount of materials on stock in each distribution centre, at least one distribution centre (M_DC) being a main distribution centre supplying one, or more, other distribution centres (DC2, DC3, DC4) in the supply chain,

calculating a safety stock curve (SSC) in a time-phased manner (m, n) to cover an uncertainty until a demand is fulfilled based on said customer data (CD) and said material data (MD), the time until demand is fulfilled is defined as a demand fulfilment time (DFT), the safety stock curve (SSC) thereby being calculated as a function of said demand fulfilment time (DFT) in order to meet said specified target service level (TSL1, TSL2) and simultaneously minimize inventory levels in said plurality of distribution centres (M_DC, DC2, DC3, DC4), and
outputting orders to the plurality of distribution centres in said supply chain in due time based on said safety stock curve (SSC).

The invention is particularly, but not exclusively, advantageous for obtaining significant advances in MRP with respect to an optimum with demand compliance to required service levels while not unnecessarily increasing safety stock levels as suggested in some prior art methods. Simulations presented and explained in more details below demonstrate convincingly the real and tangible effect of the invention.

Using the safety stock curve according to the present invention gives an actual service level that is much closer to the target service level compared to Forecast driven MRP and Reorder planning using previous state of the art ways of setting safety stocks levels. Thus, the benefits of the invention include reaching target service level with a lower total stock amount.

Simulations of the traditional safety stock methods performed by the present inventor show that actual service levels on a main distribution centre are significantly less than the target service level. The same simulations for the method according to the present invention give significantly better actual service levels. This may be due to two main reasons:

1. The safety stock curve ensures that orders are triggered to cope with the demand uncertainty in the total lead time including upstream components (in multiple stages). In this way, dependent demand always triggers upstream orders in due time.

2. The safety stock curve ensures that orders are released to cope with the demand uncertainty during lead time, which is significantly less than for the total lead time.

The number of stock points with safety stock are reduced to customer facing stock points. This gives a much more transparent end-to-end of the supply chain planning that is only driven by true customer demand, forecast and the safety stock curve. Advantageously, the present invention may also take larger order sizes into account than previously possible.

Definitions:

In the context of the present invention, it may be understood that a 'supply chain' starting with unprocessed raw materials and ending with the final customer using the finished goods, and the supply chain may thereby link many companies and/or entities together. Likewise, the supply chain may represent material and informational interchanges in the logistical process stretching from acquisition of raw materials to delivery of finished products to the end users. In some situations, a supply chain may also be described as a material flow from suppliers of raw material to the final customers. All vendors, service providers and customers are then links in the supply chain. In a supply chain, it will generally then be understood in the context of this application that the term 'material' may represent - but not be exclusively limited to - raw material, partly or fully processed raw material, partly or fully assembled parts of a product, and/or parts or full products as the skilled person working with supply chain control and management will immediately understand.

In the context of the present invention, it may be understood that a 'customer segment' may represent the result of dividing customers into groups based on specific criteria, such as products purchased, customer geographic location, demand patterns, priority of customers (e.g. high/medium/low), etc. as the skilled person working with supply chain control and management will immediately understand.

In the context of the present invention, it may be understood that the term 'service level' may be considered a metric, shown e.g. as a percentage or another relative measure, alternatively an absolute measure, which captures the ability to satisfy demand or responsiveness. Order fill rates and machine or process up-time are examples of service level measures. It generally measures an ability of the suppliers to provide their materials and goods at the agreed times, quantity, and quality. More particular, a 'target service level' may then represent a desired, intended and/or planned service level that a supply chain management system will attempt or strive to reach under the given circumstances and constraints.

In the context of the present invention, it may be understood that a distribution centre (DC) may be a point of receiving, storing and/or further delivery of materials, i.e. an inventory storage entity/system, a warehouse or similar point in a supply chain. In particular, a distribution centre may be interpreted broadly as a place in the supply chain where materials from upstream are partly or fully assembled, partly or fully processed, and/or a place where intermediate products or goods are further processed towards a fully manufactured product. Effectively, a distribution centre may then include an assembly site or a manufacturing site in a supply chain as the skilled person working with supply chain control and management will immediately understand.

In the context of the present invention, it may be understood that at least one distribution centre is a main distribution centre in the sense that said main distribution centre supplies at least one other distribution centre, e.g. said main distribution centre may be a warehouse and said other distribution centre may be a retailer or similar, as the skilled person will understand when being familiar with multi-stage or multi-echelon inventory systems, where an inventory system has a number of coupled inventory or storage installations, typically scattered over a relatively large geographical area. For further reading and details about such coupled distribution centres, the skilled reader is again referred to the book Inventory Control by Sven Axsater, Springer Science+ Business Media, 2006, particularly chapters 8-10 about multi-echelon inventory systems, said book, especially said chapters 8-10, being hereby incorporated by reference in their entirety.

It should be noted that the present invention relates generally to the technical field of logistics and supply chain planning. This field may be viewed both from an administrative and a technical point of view, but it should be stressed that the present invention arises out of technical insight in this area, and is based on technical and mathematical considerations made by an inventor having a technical education and training as an engineer.

Moreover, though the present invention may be implemented on one, or more, computers with specifically adapted algorithms for this purpose, the invention provides quite tangible and direct results directly linked with the real physical world i.e. materials are transported in improved ways thereby saving time, energy and/or resources when implemented in an actual supply chain, hence the invention has a direct impact on the physical reality. This impact has also clearly a direct physical impact, which is beyond mere calculations and transfer of data between computers and entities in a connected network.

Furthermore, the invention provides an inherent technical effect when implemented on computer in the sense that when materials are moved according to corresponding outputted orders to the supply chain, the technical effects will be significant and measurable, as evidenced by the simulations presented below. Thus, there is will certainly be a further technical effect resulting from the present computer-implemented invention when applied to MRP in a specific supply chain, as the skilled person in logistics and supply chain planning will readily understand upon understanding and fully appreciating the invention.

In advantageous embodiments, the safety stock curve (SSC) may be calculated as a function of said demand fulfilment time (DFT) across the supply chain, preferably the entire supply chain, which is known to be an end-to-end E2E implementation. The safety stock curve is then used to drive the E2E supply net requirements planning and BOM explosion e.g., to trigger orders, such as upstream orders (manufacturing, purchase, replenishment, transportation etc.) in due time with sufficient total buffers. This may be for example be based on traditional forecast driven supply planning - but using the safety stock curve according to the present invention, where orders may be created where the projected stock goes below the safety stock curve. Preferably, the safety stock curve (SSC) may be calculated as a function of said demand fulfilment time (DFT) across the supply chain from one, or more, customers segments, at least to said main distribution centre.

Typically, there may be an independent demand from one, or more, customer segment(s) resulting in some uncertainty.

Surprisingly, the safety stock curve (SSC) calculated may not directly be related to a specific lead time, which is otherwise expected in other MRP models.

Advantageously, an order, preferably a replenishment order, may be initiated when a projected stock of material in one, or more, distribution centre(s) is below the safety stock curve (SSC).

In beneficial embodiments, a calculation of the safety stock curve (SSC) may depend on, if the demand can be modelled as a continuous demand, more preferably the demand may then be modelled based on a normal distribution or Gamma distribution. Thus, a continuous demand model may be modelled by using a Normal distribution or Gamma distribution.

In other beneficial embodiments, a calculation of the safety stock curve (SSC) may depend on, if the demand can be modelled as a discrete demand. Preferably, the demand may then be modelled based on Compound Poisson distribution. The demand can be modelled as discrete demand if there are few expected consumption lines during DTF, or if the consumption order size variation is significant. The mathematics behind the Compound Poisson method is somewhat complex and therefore challenging to directly implement in a computerized solution.

Compound Poisson distribution of Demand can be described as:

$$P(D(t) = j) = \sum_{k=0}^{\infty} \frac{(\lambda t)^k}{k!} e^{-\lambda t} f_j^k \ .$$

$$f_j^k = \sum_{i=k-1}^{j-1} f_i^{k-1} f_{j-i}, \quad k = 2, 3, 4, \ldots$$

Probability of inventory level of j with Reorder point (ROP) of R based on Compound Poisson and supply order size of Q is then:

$$P(IL = j) = \frac{1}{Q} \sum_{k=\max\{R+1, j\}}^{R+Q} P(D(L) = k - j) \quad j \leq R + Q,$$

Fill rate Service Level based on Compound Poisson distributed demand can be given as follows:

$$S_2 = \frac{\sum_{k=1}^{\infty} \sum_{j=1}^{\infty} \min(j, k) \cdot f_k \cdot P(IL = j)}{\sum_{k=1}^{\infty} k f_k} \ .$$

However, the present invention may be advantageously implemented in the following way:

1. Normalise the order size patterns
2. Use order size patterns based on the order size variation
3. Implement a simulation of service levels for all combinations of:

- Lines per lead time
- Supply order size
- Order size pattern
- Reorder point - in multiple of normalised order size

4. Use a table optimized to find Reorder point based on target service level, or find service level based on Reorder point

In advantageous embodiments, a reorder point curve may be calculated instead of a safety stock curve (SSC). Thus, both a reorder point curve or a safety stock curve can be used for discrete demand and is typically modelled via a Compound Poisson distribution as described above. The difference between the reorder point curve and the safety stock curve is that the reorder point already includes the forecast. The calculation of these curves for Compound Poisson distribution is part of the teaching of the present invention. The curves for the Compound Poisson are not continuous curves as for Normal and Gamma distribution. The curves are preferably stepwise curves. The steps occur when the consumption/sales order lines per DFT triggers a higher reorder point (and thereby a higher safety stock) to meet a desired target service level.

In other beneficial embodiments, a buffer curve may be applied to stabilize the MRP method, said buffer curve being calculated so that replenishment orders are fixed in time and/or quantity, if a projected stock stays between the safety stock curve (SSC) and the buffer curve. Thus, a buffer curve can be used to stabilize the MRP calculations. The orders are fixed in time and quantity, if the projected stock stays between the safety stock curve and the buffer curve. The interval between safety stock curve and the buffer curve is in this way a kind of stabilization buffer. The order moves earlier, if projected stock goes below the safety stock curve earlier. The order moves later, if the projected stock is above the buffer curve. The order is then created where the projected stock goes below the safety stock curve. The buffer curve increases over time from zero at the products lead time. The order is in this way never released earlier due to the buffer curve - but the MRP stability is increased when DTF increases.

In yet other beneficial embodiments, a negative safety stock value may be used at one, or more, upstream stock point(s) to reduce total safety stock by utilizing a portfolio effect of the downstream demand variation sources, the skilled person will understand the central limit theorem can used in context with the portfolio effect. The negative safety stock is a more transparent way than introducing a decoupling stock point and better way to handle large order. Preferably, the safety stock in said supply chain may increase across possible stock points for storing material until a decoupling stock point - that is not controlled via a negative safety stock - is reached. The negative safety stock may be calculated or simulated as the sum of downstream safety stock curves from finished goods minus the safety stock curve for the component. It is important that possible covariation between the different downstream demand variation sources is considered e.g., increase in demand in different regions can be highly correlated due to the high degree of globalized supply chains. The negative safety stock may be different for components used by one product. Some components are used in many products and have relatively higher portfolio effect and thereby a higher negative safety stock than other components that are only used in few products.

In some embodiments, orders may be released to production, supplier and/or transportation when there are supply constraints, such as capacity bottlenecks, preferably the orders are prioritized according to the safety stock curve (SSC).

In other embodiments, there may be an additional step of executing orders to the plurality of distribution centres (M_DC, DC2, DC3, DC4) in said supply chain in due time based on said safety stock curve (SSC) is performed by transporting, manufacturing, assembling and/or purchasing corresponding materials in said supply chain.

In a second aspect, the invention relates to a computer-implemented MRP planning system for controlling materials in a supply chain on one or more computer(s), preferably a system comprising one, or more, computer(s), more preferably a plurality of computers distributed in said supply system, the system comprising:

a computer (COMP) arranged for receiving customer data (CD) related to a plurality of customer segments (CS1, CS2) and the corresponding demand from each customer segment, each customer segment having a specified target service level (TSL1, TSL2),

the computer further being arranged for receiving material data (MD) related to a plurality of distribution centres (M_DC, DC2, DC3, DC4) related to the amount of materials on stock in each distribution centre, at least one distribution centre (M_DC) being a main distribution centre supplying one, or more, other distribution centres (DC2, DC3, DC4) in the supply chain,

the computer being further arranged for calculating a safety stock curve (SSC) in a time-phased manner (m, n) to cover an uncertainty until a demand is fulfilled based on said customer data (CD) and said material data (MD), the time until demand is fulfilled is defined as a demand fulfilment time (DFT), the safety stock curve (SSC) thereby being calculated as a function of said demand fulfilment time (DFT) in order to meet said specified target service level (TSL1, TSL2) and simultaneously minimize inventory levels in said plurality of distribution centres (M_DC, DC2, DC3, DC4), and

the computer being arranged for outputting orders to the plurality of distribution centres (M_DC, DC2, DC3, DC4) in said supply chain in due time based on said safety stock curve (SSC).

In a third aspect, the invention relates to a computer program product being adapted to enable a computer system comprising at least one computer having data storage means in connection therewith to control an computer-implemented system according to the second aspect of the invention, such as a computer program product comprising instructions which, when the program is executed by a computer, cause the computer to carry out the method of the first aspect of the invention.

This aspect of the invention is particularly, but not exclusively, advantageous in that the present invention may be accomplished by a computer program product enabling a computer system to carry out the operations of the system of the second aspect of the invention when down- or uploaded into the computer system, preferably the computer system comprises a plurality of connected computers for implementing the invention. Such a computer program product may be provided on any kind of computer readable medium, or through a network.

The individual aspects of the present invention may each be combined with any of the other aspects. These and other aspects of the invention will be apparent from the following description with reference to the described embodiments.

BRIEF DESCRIPTION OF THE FIGURES

The invention will now be described in more detail with regard to the accompanying figures. The figures show one way of implementing the present invention and are not to be construed as being limiting to other possible embodiments falling within the scope of the attached claim set.

Figure 1 is an overall schematic outline of a supply chain according to the present invention,

Figure 2A is a generic and schematic supply chain with a MRP method according to the present invention, Figures 2B and 2C illustrates the problem to be solved by the present invention,

Figure 3 schematically shows another supply chain with a MRP method according to the present invention,

Figure 4A shows an example of how invention is better than the two prior art methods, and 4B is a table of simulation results obtain by a MRP method according to the present invention as compared to two prior art methods,

Figure 5 schematically shows other supply chains with a MRP method according to the present invention together with corresponding safety stock curves across the supply chain, Figure 5B shows an example of a safety stock curve, Figure 5C shows both a safety stock curve and a buffer curve

Figures 6-8 schematically show other supply chains with a MRP method according to the present invention together with corresponding safety stock curves,

Figures 9-10 schematically show various other supply chains with a MRP method according to the present invention, and

Figure 11 is a schematic system-chart representing an out-line of/in detail the operations of the computer-implemented method according to the invention.

DETAILED DESCRIPTION OF AN EMBODIMENT

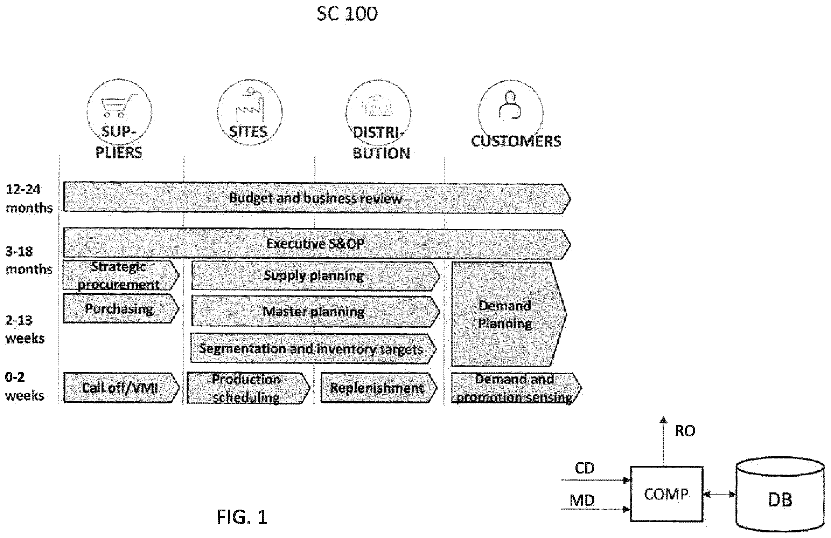

Figure 1 is an overall schematic outline of a supply chain SC 100. The flow of materials or goods is generally from the left towards the right in Figure 1 as indicated by the various block arrows. In the upper most level of Figure 1, a supply chain infrastructure is indicated in circles with suppliers SUP, sites PLANTS (incl. contract manufacturing organisations CMO), and transport between the suppliers and sites delivering the materials to the various places and sites in the supply chain.

A distribution centre will below be abbreviated DC, and *DCs* in plural. A main distribution centre is accordingly abbreviated *M_DC.* In the below embodiments, just one main distribution centre is shown, but the present invention may of course be implemented with a plurality of main distributions centres in the understanding of this concept, as the skilled person in MRP will readily understand once the principle and teaching of the present invention is appreciated. Thus, one or more main distribution centre(s) may also be called primary distribution centres, whereas the other distribution centres may be called secondary distribution centres in the following.

On the very left is indicated the relevant time scales of operation, a week scale having Purchasing followed by Production scheduling and transport towards to the (planned) sites as the skilled person will readily understand.

On a longer time scale, e.g. months, the various planning steps and more strategic goals are illustrated schematically. The *S&OP* abbreviation means sales & operation planning.

The present invention relates to a computer-implemented MRP method for controlling materials in a supply chain SC 100. Schematically indicated in the lower right corner of Figure 1 is a corresponding computer COMP functionally connected and integrated with a database DB for storing and retrieving various data, stored in appropriate and various data formats, related to implementing the present invention. Though indicated as a single computer COMP and a single database DB, the skilled person will readily understand that a plurality of computers and/or databases may be applied for implementing the invention, for example a plurality of geographically distributed computers, incl. handheld devices, that are interconnected for example via the internet, by wire and/or wirelessly, for example a cloud-based computer solution.

The computer COMP is arranged for receiving customer data CD related to a plurality of customer segments, e.g. high priority customers and other customers, and the corresponding demand from each customer segment, where each customer segment having a specified target service level, such as percentage of service level to be reached. The demand from each customer segment may be a predicted, a forecasted and/or a real demand as the skilled person will understand.

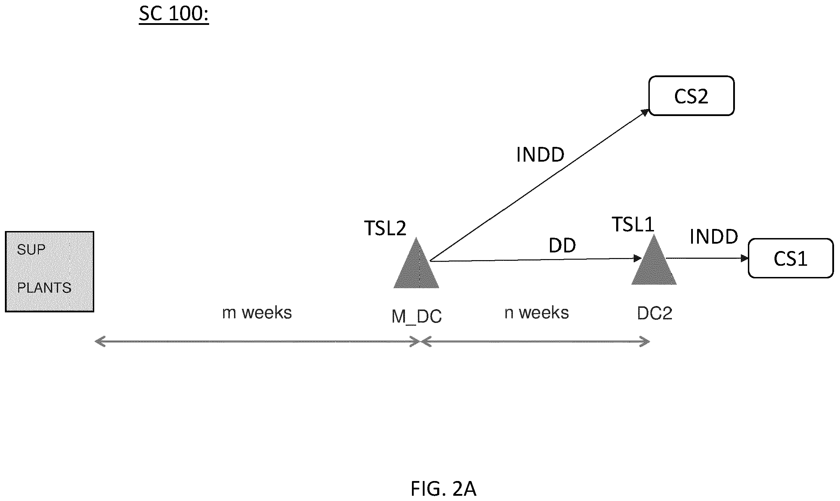

The computer COMP is likewise arranged for receiving material data MD related to a plurality of distribution centres often just called 'locations' in the field of logistics, e.g. M_DC and DC2 as shown in Figure 2A, the data MD being related to the amount of materials on stock in each distribution centre, where at least one distribution centre is a main distribution centre M_DC supplying one, or more, other distribution centres DC2 in the supply chain SC 100. Material data includes master data describing the materials, locations, and the supply chain structure etc.

Customer data CD and material data MD may be automatically collected in the supply chain and transmitted to the computer COMP, such as by use of tracing and tracking technology applicable in a supply chain, as the skilled person will understand. These data may also be manually collected, or in any combination between being automatically and manually collected.

Based upon said customer data CD and said material data MD, the computer will output orders, preferably upstream orders and/or replenishment order RO, as schematically indicated by the arrow from the computer COMP, back to the plurality of distribution centres in the supply chain SC in due time as normally performed in MRP, but based on a new and advantageous safety stock curve according to the present invention, as it will be explained below.

Figure 2A is a generic and schematic supply chain with a MRP method according to the present invention, where a distribution centre DC2 is distributing materials to a customer segment CS1 having an independent demand INDD and is in turn supplied from the main distribution centre M_DC thereby experiencing a dependent demand DD from the distribution centre DC2, for example between a warehouse and a retailer like the skilled person in supply chain management will readily understand. Each of the distribution centres M_DC and DC2 can of course each have a plurality of customer segments, but for illustrative purposes, the invention is initially explained in this simplified setup, the teaching and general principle of the invention, and the associated benefits, not being limited to this setup, as the skilled person in supply chain management will also readily understand.

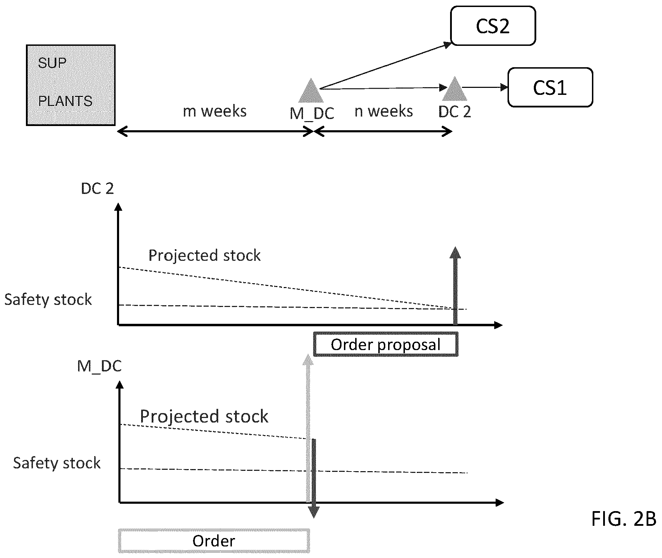

Figure 2B shows that an order proposal is created at DC 2 when the projected stock gets below safety stock. The order proposal on DC 2 has a dependent requirement on M_DC. This dependent requirement on M_DC reduces the projected stock on M_DC to below safety stock. This creates an order on M_DC because the replenishment lead time on M_DC (m weeks) is equal to the date when the project stock is below the safety stock.

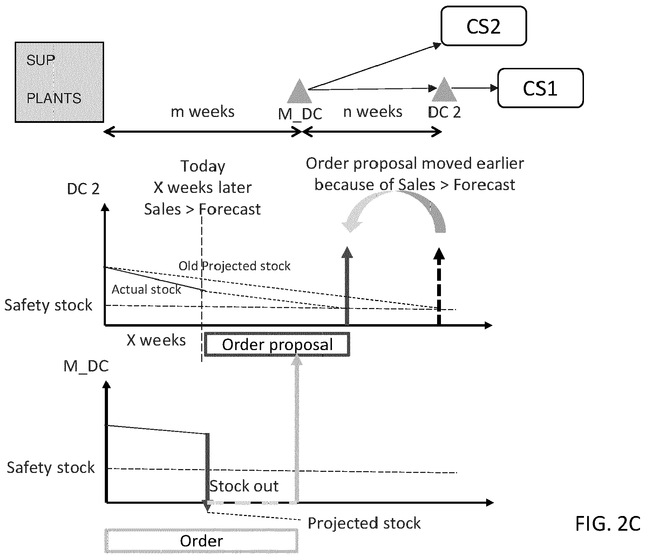

Figure 2C shows the situation x weeks later. The order proposal on DC2 has moved earlier because the sales has been greater than the forecast during the x weeks. The dependent requirement from the order proposal on DC2 is also moved earlier. This dependent requirement on M_DC is now earlier than the replenishment order on M_DC that is already in progress. There is now a high probability that there will be stock outs on M_DC.

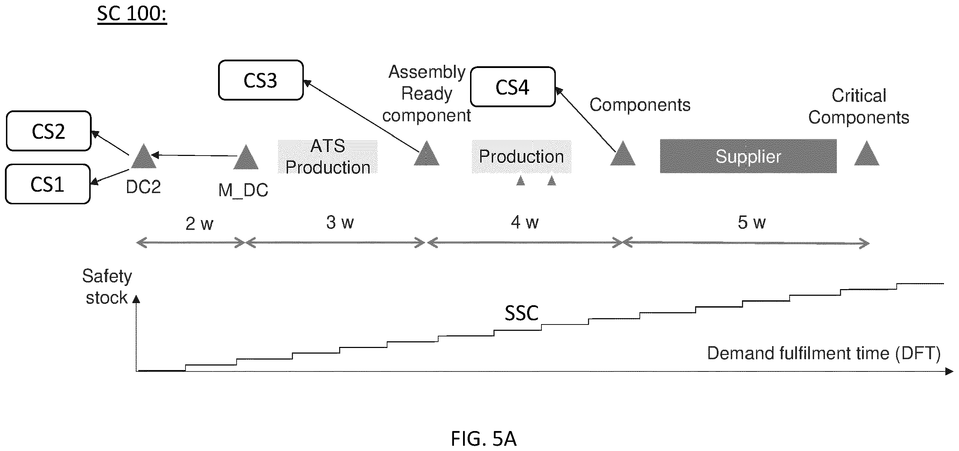

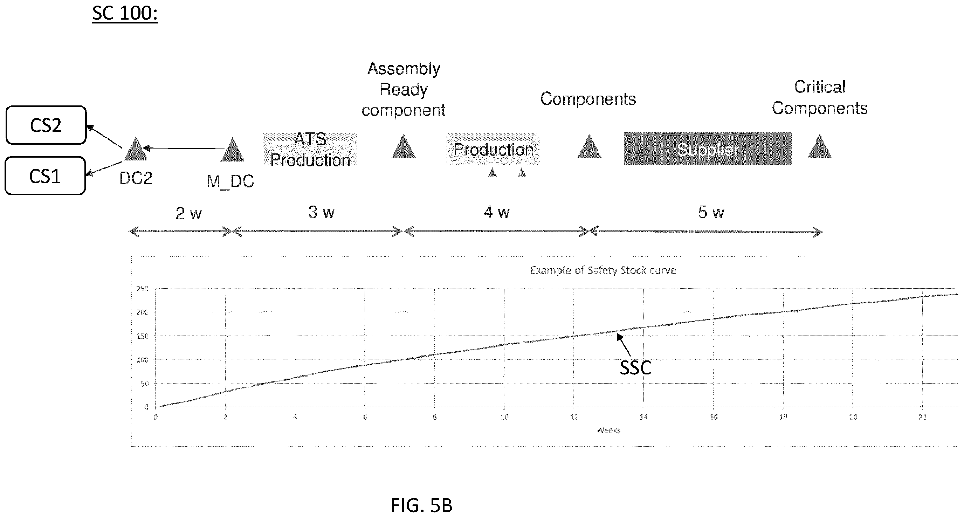

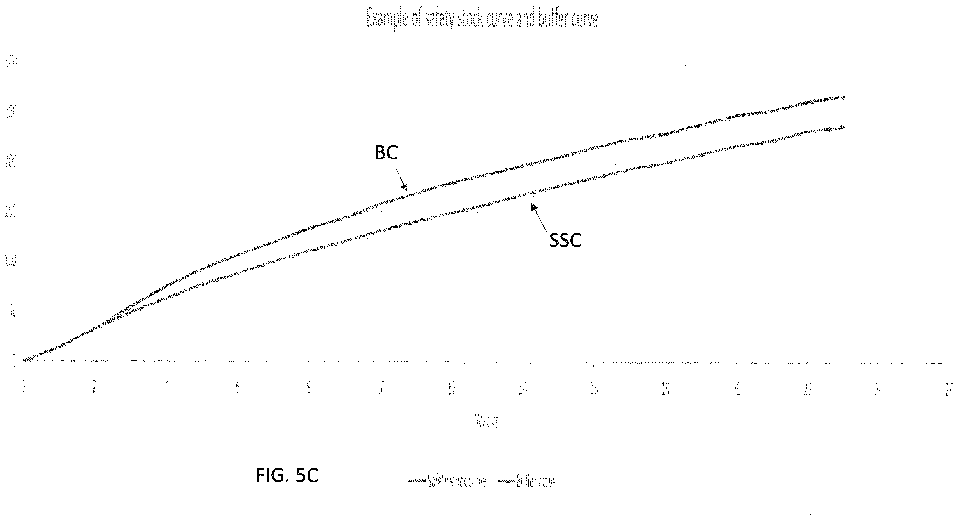

The invention is particular in calculating a safety stock curve SSC, cf. Figures 5-8 for some examples, in a time phased manner based on the two periods m and *n* around the main distribution centre M_DC to cover an uncertain until a demand is fulfilled based both on the customer data CD and the material data MD. In the Figures and the corresponding description, the invention is illustrated with the periods m and n being measured in weeks, e.g. 6 and 2 weeks, but the invention can of course be implemented in any relevant time period for MRP, such as alternatively hours, days, months, or even years. The number of time periods may similarly be adjusted to the number of distribution centres as the skilled person will immediately understand, the embodiment with two periods in weeks merely being chosen for illustrative purposes. The time until demand is fulfilled is defined as a demand fulfilment time DFT, and the safety stock curve SSC is then calculated as a function of the demand fulfilment time DFT in order to meet said specified target service level, TSL1 and TSL2 in the distribution centres and simultaneously minimize inventory levels in said plurality of distribution centres M_DC and DC2, respectively.

As also indicated in Figure 1, the invention is then implemented in the supply chain SC 100 by outputting, e.g. from a computer COMP, upstream orders RO to the plurality of distribution centres in said supply chain in due time based on said safety stock curve SSC with resulting advantageous and unexpected results. The safety stock curve is used to drive the supply net requirements planning and bill- of-material BOM explosion e.g., to trigger upstream orders such as manufacturing, purchase, replenishment, transportation etc. in due time with sufficient total buffers. This is based on traditional forecast driven supply planning - but using the safety stock curve. Thus, orders are created where the projected stock goes below the safety stock curve.

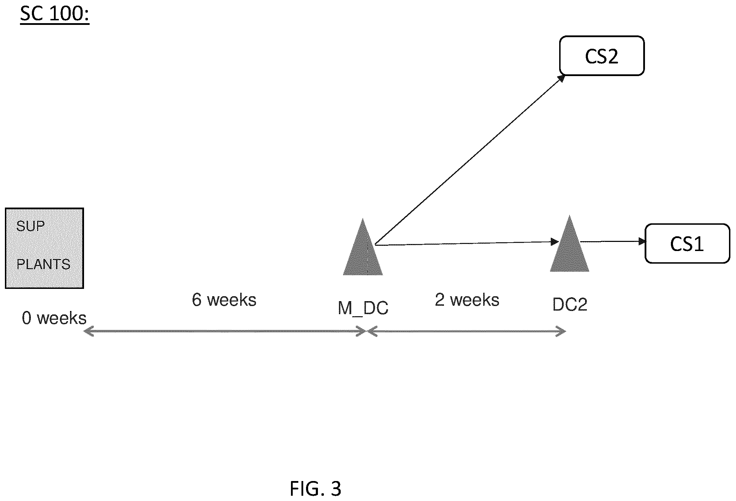

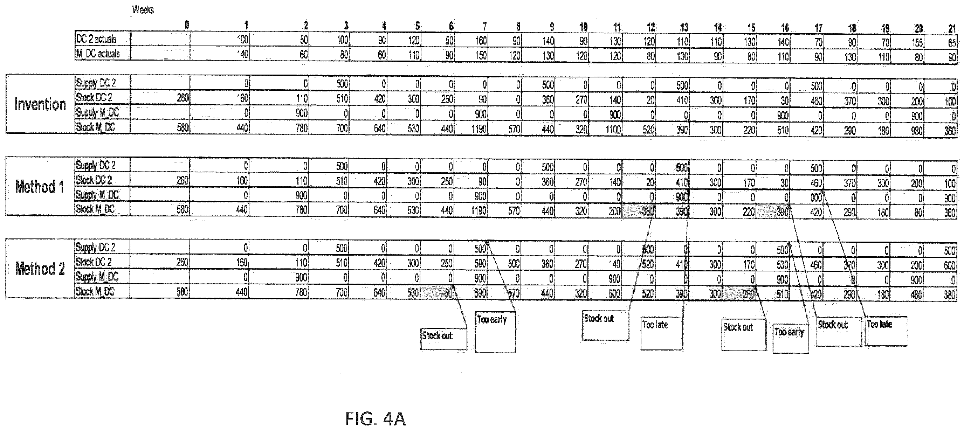

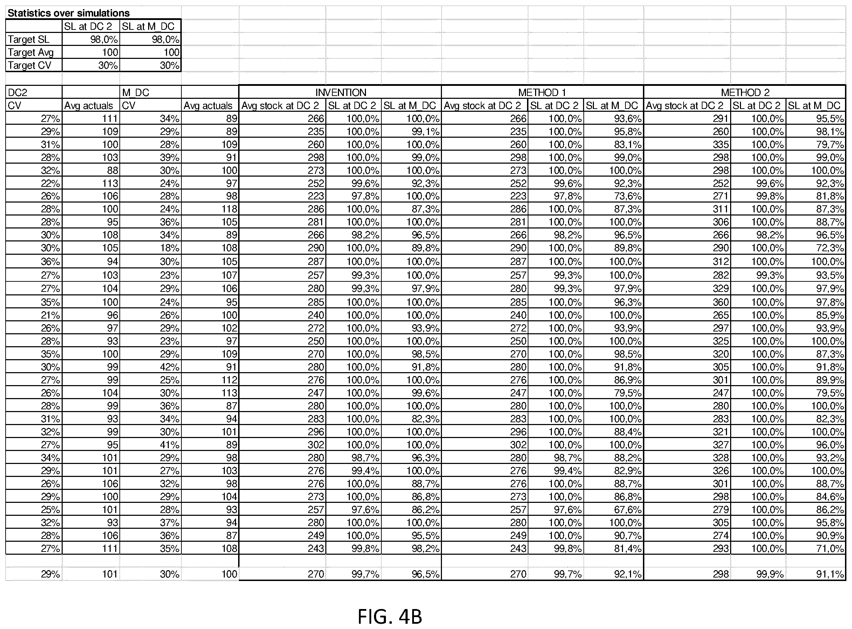

For further illustrating the invention, the invention is simulated and compared to two prior art methods called Method 1 and Method 2. Thus, Figure 3 schematically shows a supply chain with a MRP method according to the present invention like in Figure 2A with m= 6 weeks and n= 2 weeks. See also Figure 4A with a table of results obtained by a MRP method according to the present invention as compared these two prior art methods and Figure 4B for a number of simulated results.

Customer segment CS1 is served by DC2:
Average Forecast = 101 units per week, average coefficient of variance CV (weekly) 29%

Customer segment CS2 served by M_DC:
Average Forecast = 100 per week, average coefficient of variance CV (weekly) 30%

There is assumed an Independent demand INDD from these customer segments, cf. Figure 2A.

Distribution centre DC2 is a secondary distribution centre with Service level TSL1 = 98%

Dependent demand from DC2 to M_DC: Order size = 500

Distribution centre M_DC is the main distribution centre: Order size = 900: Service level TSL2 = 98%

Prior art methods

There are generally two existing methods to calculate the safety stocks on DC2 and M_DC in this situation:
Method 1:

Safety stock on DC2 is only covering the replenishment time of DC2 (n weeks).
Safety stock on M_DC is then covering the replenishment time of M_DC (m weeks) for the full demand on M_DC.

The problem with this prior art method is that the order to replenishment of M_DC can be triggered too late to handle the replenishment of DC2 and the independent demand on DC2. The result may be out of stock of materials on M_DC.

Method 2:
Safety stock on DC2 covering the full replenishment time of both M_DC and DC2 (m + n weeks). Safety stock on M_DC covering the replenishment time of DC2 (m weeks) but only for the independent demand on M_DC.

The problem with this method is that the order to replenishment of DC2 can be triggered too early (too high safety stock). The result may be out of stock of materials on M_DC and higher stock on D2. The risk of stock out increases, if the higher replenishment order size to DC2 is large compared to the total demand on DC2.

The invention

The method according to this invention instead uses a new safety stock curve SSC to calculate the safety stocks. The safety stocks are then not static over time, and surprisingly combines the benefits from both prior art Method 1 and Method 2.

The safety stock on DC2 in week m + $n$ is the same as for Method 2.

The safety stock on DC2 in week m is the same as for Method 1.

The advantage compared to Method 1 is that the planned replenishment order to DC2 is in this way planned in due time - so that the dependent demand on M_DC is known in advance. The replenishment order to M_DC is in this way planned in due time (like in Method 2).

The advantage compared to Method 2 is accordingly that the planned replenishment order to DC2 is in this way planned in due time like Method 2 - but is triggered later due to the lower safety stock on the shorter horizon. The replenishment order to M_DC is in this way not triggered too early (like in Method 1).

In the table shown in Figure 4A, an example is simulated in great detail in weeks 0-21 with the two prior art methods, called Method 1 and Method 2 as described above, and the present invention. Some conclusions from this example follows:

- For Method 1, there is a stock out on the main distribution centre M_DC in week 12 and 16 because replenishment to M_DC is too late.

- With Method 2, there is a stock out on M_DC in week 6 and 15 because replenishment to the other distribution centre DC2 is too early.

- The invention with replenishment orders being calculated using the safety stock curve SSC facilitates that there are no stock outs situations in these weeks.

In Figure 4B, there is a summarized statistic overview for a series of simulations like the one shown in Figure 4A with the most important findings from these simulations. Overall, the invention provides average service levels SL of 99.7% and 96.5% at the secondary and main distribution centre, respectively, against a nominal target of 98% for both. Particularly at the main distribution centre in the Table) this is significantly better than the prior art methods, Method 1 and Method 2, with corresponding service levels of only 92.1% and 91.1%, respectively. Thus, the invention is superior to the Method 1 and Method 2 known in the prior art for supply chain management and inventory control.

Figure 5A schematically shows another supply chain SC 100 with a MRP method according to the present invention with a corresponding safety stock curve SSC (lower graph) across the supply chain SC 100. One customer segment CS1 can be categorized as high priority, and the other segment CS2 as normal or lower priority. The main distribution centre M_DC can be defined per product, and likewise with the distribution centre DC2. In this embodiment, with Assembly Ready Components (ARC) the components and raw materials comes from suppliers, and the components may be stocked at the supplier as indicated schematically. The end-to-end E2E supply chain planning according to the present invention enables that orders are triggered upstream based on the forecast and the time-phased safety stocks for:

- Transportation/replenishment order proposal
- Assembly To Stock (ATS) production order proposal
- Production order proposal
- Purchase order proposal

In Figure 5B, the actual safety stock curve SSC is inserted in the lower graph for illustrating how the invention may be implemented for this specific example. In Figure 5C, the same graph as in Figure 5B is shown with the safety stock curve SSC together with a buffer curve BC for stabilizing the MRP calculations or simulations according to the present invention.

The safety stock curve can be calculated by using the fill rate method if the demand is continuous and may be modelled by using a Normal distribution.

The fill rate model may be used to calculate the safety stock curve:

The safety stock (*SS*) can be set equal to a safety factor (*k*) times the compound standard deviation of demand during demand fulfilment time ($\sigma_{dDFT}$):

where

$$SS = k * \sigma_{dLT}$$

and

$$\sigma_{dLT} = \sqrt{\left(\sigma_d{}^2 * DFT + \bar{d}^2 * \sigma_{LT}{}^2\right)}$$

and where the safety factor (k) is found via the fill rate model.

Select k, where

$$G(k) - G\left(k + \frac{Q}{\sigma_{dLT}}\right) = (1 - Fill\ rate) * \frac{Q}{\sigma_{dLT}}$$

*G*(*k*) is a special function of the unit normal (mean 0, standard deviation 1). This function is used for finding the expected shortages per replenishment cycle needed for fill rate calculations.

**Notation:**

*k*    *is the* safety factor based on normal distribution function.

$\sigma_{dLT}$    is the standard deviation of demand during demand fulfilment time.

*Q*    is the average replenishment order size.

$\bar{d}$    is the average demand per time period.

*DFT*    is the demand fulfilment time used as the x-axis in the safety stock curve

$\sigma_d^2$    *is the variance of demand per time period.*

$\sigma_{LT}^2$    *is the variance of demand fulfilment time*

$\bar{d}_{dLT}$    *is the demand during demand fulfilment time*

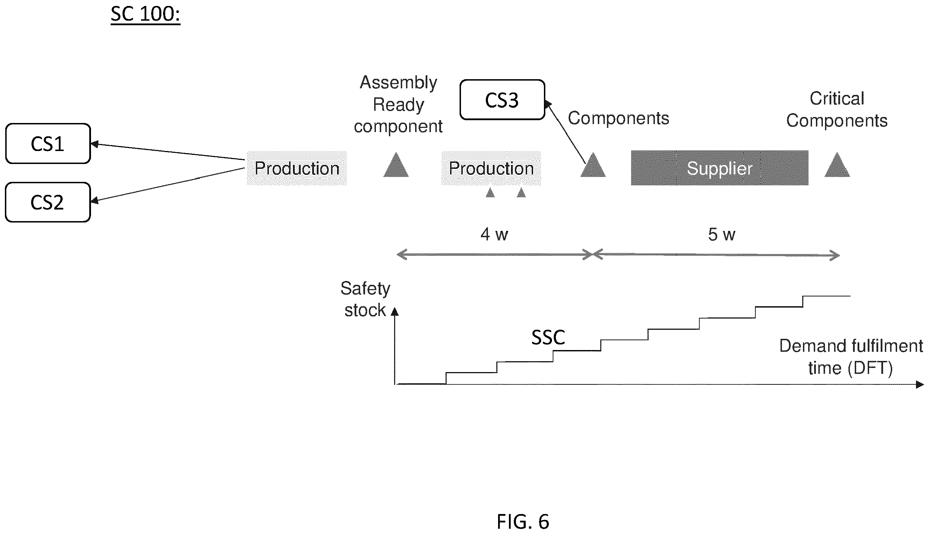

Figures 6-8 schematically show other supply chains with a MRP method according to the present invention together with corresponding safety stock curves.

Figure 6 is similar to Figure 5, but with production closer to the customer segments to the far right. This is a so-called assembly-to-order, make-to-order, engineer-to-order setup with similar advantages.

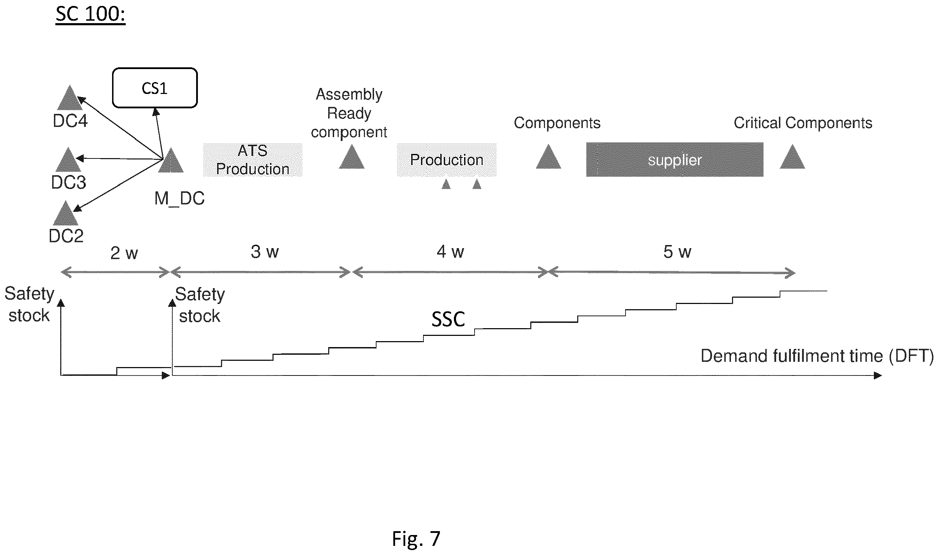

Figure 7 is similar to Figures 5 and 6, but with an example of a so-called decoupling stock point. There is a direct delivery of materials from main distribution centre M_DC to customer segment CS1. Again, the main distribution centre may be defined per product, and the supply chain has assembled ready components (ARC).

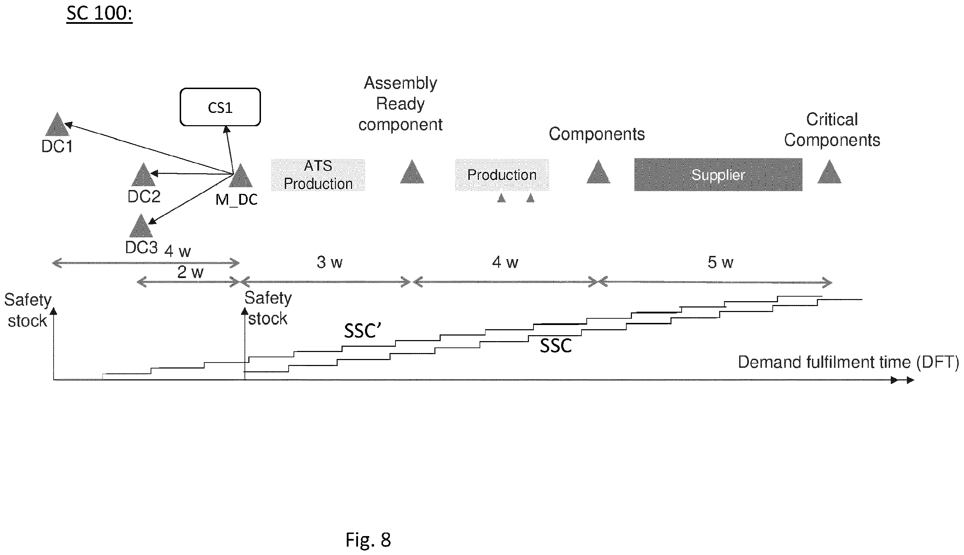

Figure 8 is similar to Figure 7, but with an example of a so-called partly decoupling stock point. It is different from Figure 7 in that the distribution centre DC1 has a longer lead time and higher replenishment order size as compared to DC2 and DC3. Determining partly decoupling stock point at the main distribution centre M_DC may then be performed in the following steps:

a) The replenishment order sizes to the secondary distribution centres DC2 and DC3 are not significant - due to the replenishment frequency and/or significant lower demand to these secondary DCs.
b) The high replenishment order size from DC1 will create significantly higher demand variation on the main distribution centre - and thereby higher safety stock on M_DC.
c) Modelling the expected demand from this special distribution centre DC1 depends on the demand pattern here. It is therefore better to separate this demand from DC1.

As indicated in Figure 8, the invention therefore comprises calculating a dedicated safety stock curve SSC' to this particular situation with a longer lead time and higher replenishment order size with respect to M_DC. For the main distribution centre itself another safety stack curve SSC may be calculated and applied to order replenishment orders, as schematically in the graph below the supply chain.

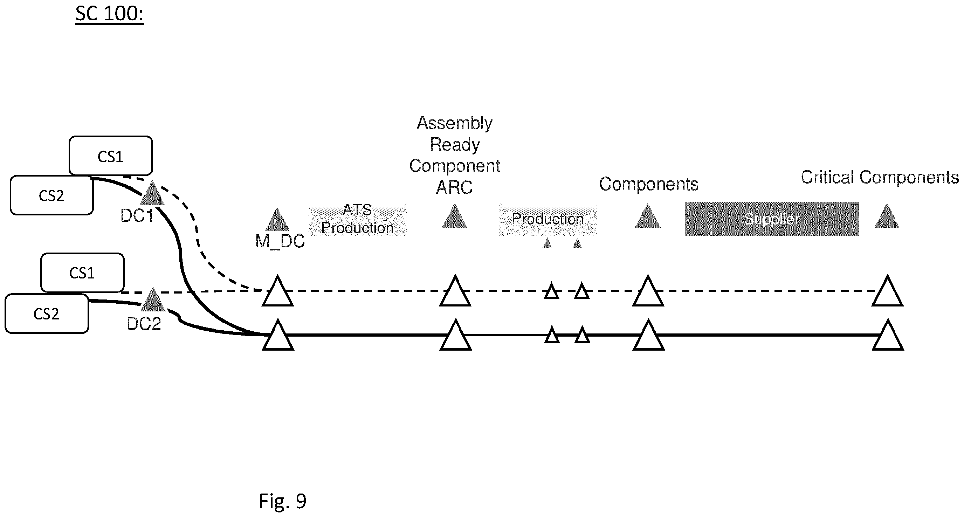

Figures 9-10 schematically shows other supply chains SC 100 with a MRP method according to the present invention.

Figure 9 shows a supply chain with a high priority customer segment CS1 (supply chain indicated with a dashed line) and a lower priority customer segment CS2, both segments being positioned in two different geographical locations as indicated. Each geographical location has a corresponding distribution centre named DC1 and DC2 supplied by main distribution centre M_DC. The supply chain contains Assembly ready components (ARC), components and raw materials from suppliers and components at suppliers as indicated in Figure 9.

Throughout the supply chain i.e. end-to-end E2E there is a demand transparency:

a) The demand from both the segments CS1 and CS2 are transparent through the full upstream supply chain

b) The E2E demand and priority transparency upstream is used when there are constraints in material, capacity etc. or disruptions in the execution e.g. delays in production, transportation etc.

c) The usage of materials, capacity etc. is prioritised according to the rules defined on segment priorities - this includes adjusting order quantities to match available capacity, materials etc.

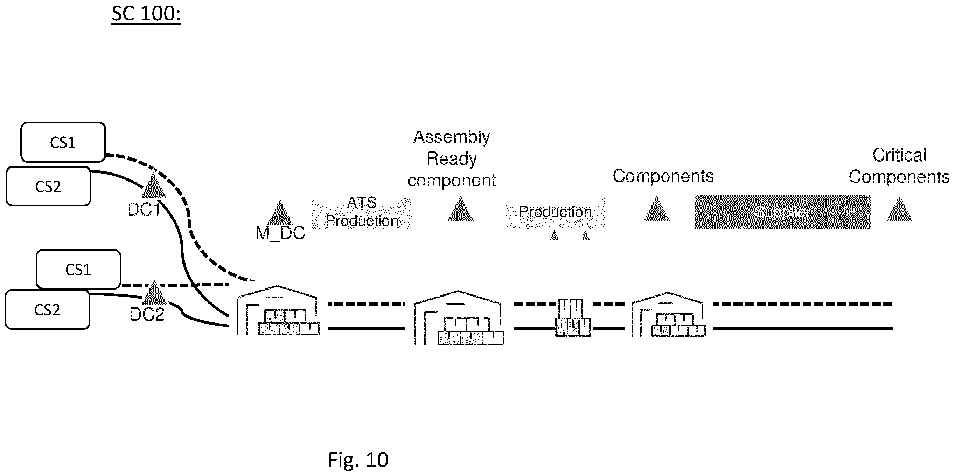

Figure 10 is similar to Figure 9, and schematically indicated how stocks can be segregated automatically to use demand segment priorities. Hence, there may be automatica stock segregation so as to respect demand segment priorities:

a) Stocks are automatically segregated into the demand segments in case of constraints or disturbances in the supply chain

b) Rules determine which orders (production, transportation, customer orders etc.) that can allocate the stock. This is based on the different demand segments that the order covers.

c) This also includes adjusting order quantities to match available capacity, materials etc.

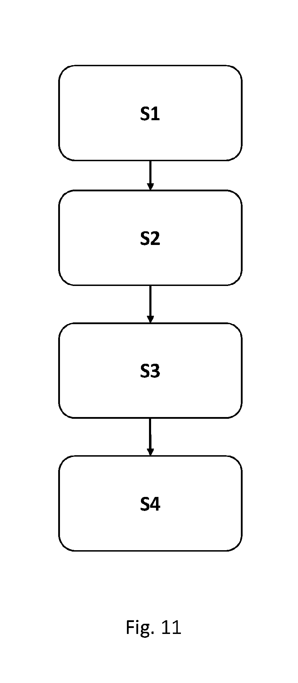

Figure 11 is a schematic system-chart representing an out-line of/in detail the operations of the computer-implemented method according to the invention. Thus, a computer-implemented MRP method for controlling materials in a supply chain SC 100 as illustrated in Figure 1, the method comprising the steps of:

**S1** receiving customer data CD related to a plurality of customer segments CS1, CS2 and the corresponding demand from each customer segment, each customer segment having a specified target service level TSL1, TSL2, as illustrated in Figures 1 & 2A,

**S2** receiving material data MD related to a plurality of distribution centres M_DC, DC2, related to the amount of materials on stock in each distribution centre, at least one distribution centre M_DC being a main distribution centre supplying one, or more, other distribution centres DC2, in the supply chain, as illustrated in Figures 1 & 2A,

**S3** calculating a safety stock curve SSC in a time-phased manner m, *n* to cover an uncertainty until a demand is fulfilled based on said customer data CD and said material data MD, the time until demand is fulfilled is defined as a demand fulfilment time DFT, the safety stock curve SSC thereby being calculated as a function of said demand fulfilment time DFT in order to meet said specified target service level TSL1, TSL2 and simultaneously minimize inventory levels in said plurality of distribution centres M_DC, DC2, DC3, and/or DC4, as illustrated in Figures 5-10, and

**S4** outputting orders RO, as illustrated in Figure 1, to the plurality of distribution centres M_DC, DC2, DC3, and/or DC4 in said supply chain in due time based on said safety stock curve SSC.

One or more steps may be performed simultaneously, or in another order than above listed, as the skilled person will readily understand.

In short, the invention relates to a computer-implemented MRP method for controlling materials in a supply chain SC with customer segments CS1, CS2 as schematically shown in Figures 1 and 2A. The invention is advantageous in that there is calculated a safety stock curve SSC in a time-phased manner m, *n* to cover an uncertainty until a demand is fulfilled based on customer data CD and material data MD. The time until demand is fulfilled is a demand fulfilment time DFT, the safety stock curve SSC being calculated as a function of this demand fulfilment time DFT in order to meet specified target service level TSL1, TSL2 and simultaneously minimize inventory levels in said plurality of distribution centres M_DC, DC2, as shown in Figures 5-8. The invention provides advances in MRP with respect to an optimum with demand compliance to required service levels while not unnecessarily increasing safety stock levels. Simulations convincingly demonstrate the effects of the invention, cf. Fig. 4A and 4B.

The invention can be implemented by means of hardware, software, firmware or any combination of these. The invention or some of the features thereof can also be implemented as software running on one or more data processors and/or digital signal processors.

The individual elements of an embodiment of the invention may be physically, functionally and logically implemented in any suitable way such as in a single unit, in a plurality of units or as part of separate functional units. The invention may be implemented in a single unit, or be both physically and functionally distributed between different units and processors.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

**Claims**

**1.** A computer-implemented MRP method for controlling materials in a supply chain, the method comprising:

- receiving customer data (CD) related to a plurality of customer segments (CS1, CS2) and the corresponding demand from each customer segment, each customer segment having a specified target service level (TSL1, TSL2),
- receiving material data (MD) related to a plurality of distribution centres (M_DC, DC2, DC3, DC4) related to the amount of materials on stock in each distribution centre, at least one distribution centre (M_DC) being a main distribution centre supplying one, or more, other distribution centres (DC2, DC3, DC4) in the supply chain,
- calculating a safety stock curve (SSC) in a time-phased manner (m, n) to cover an uncertainty until a demand is fulfilled based on said customer data (CD) and said material data (MD), the time until demand is fulfilled is defined as a demand fulfilment time (DFT), the safety stock curve (SSC) thereby being calculated as a function of said demand fulfilment time (DFT) in order to meet said specified target service level (TSL1, TSL2) and simultaneously minimize inventory levels in said plurality of distribution centres (M_DC, DC2, DC3, DC4), and
- outputting orders to the plurality of distribution centres (M_DC, DC2, DC3, DC4) in said supply chain in due time based on said safety stock curve (SSC).

2. The method according to claim 1, wherein the safety stock curve (SSC) is being calculated as a function of said demand fulfilment time (DFT) across the supply chain.

3. The method according to claim 1 or 2, wherein the safety stock curve (SSC) being calculated as a function of said demand fulfilment time (DFT) across the supply chain from one, or more, customers segments (1,2) at least to said main distribution centre (M_DC).

5. The method according to claim 1, wherein there is an independent demand from one, or more, customer segment(s).

6. The method according to claim 1, wherein the safety stock curve (SSC) is calculated not directly related to a specific lead time.

7. The method according to any of the preceding claims, where an order is initiated when a projected stock of material in one, or more, distribution centre(s) is below the safety stock curve (SSC).

8. The method according to any of the preceding claims, wherein calculation of the safety stock curve (SSC) depends on, if the demand can be modelled as a continuous demand.

9. The method according to claim 8, wherein the demand is modelled based on a normal distribution or Gamma distribution.

10. The method according to any of the claims 1-7, wherein calculation of the safety stock curve (SSC) depends on, if the demand can be modelled as a discrete demand.

12. The method according to claim 10, wherein the demand is modelled based on Compound Poisson distribution.

13. The method according to claim 10, wherein a reorder point curve is calculated instead of a safety stock curve (SSC).

14. The method according to any of the preceding claims, wherein a buffer curve is applied to stabilize the MRP method, said buffer curve being calculated so that replenishment orders are fixed in time and/or quantity, if a projected stock stays between the safety stock curve (SSC) and the buffer curve.

15. The method according to any of the preceding claims, wherein a negative safety stock value is used at one, or more, upstream stock point(s) to reduce total safety stock by utilizing a portfolio effect of the downstream demand variation sources.

16. The method according to claim 15, wherein the safety stock in said supply chain increases across possible stock points for storing material until a decoupling stock point - that is not controlled via a negative safety stock - is reached.

17. The method according to any of the preceding claims, wherein orders are released to production, supplier and/or transportation when there are supply constraints, such as capacity bottlenecks, preferably the orders are prioritized according to the safety stock curve (SSC).

18. The method according to any of the preceding claims, wherein an additional step of executing orders to the plurality of distribution centres (M_DC, DC2, DC3, DC4) in said supply chain in due time based on said safety stock curve (SSC) is performed by transporting, manufacturing, assembling and/the purchasing corresponding materials in said supply chain.

**19.** A computer-implemented MRP planning system for controlling materials in a supply chain on one, or more, computer(s), the system comprising:

a computer (COMP) arranged for receiving customer data (CD) related to a plurality of customer segments (CS1, CS2) and the corresponding demand from each customer segment, each customer segment having a specified target service level (TSL1, TSL2),

the computer further being arranged for receiving material data (MD) related to a plurality of distribution centres (M_DC, DC2, DC3, DC4) related to the amount of materials on stock in each distribution centre, at least one distribution centre (M_DC) being a main distribution centre supplying one, or more, other distribution centres (DC2, DC3, DC4) in the supply chain,

the computer being further arranged for calculating a safety stock curve (SSC) in a time-phased manner (m, n) to cover an uncertainty until a demand is fulfilled based on said customer data (CD) and said material data (MD), the time until demand is fulfilled is defined as a demand fulfilment time (DFT), the safety stock curve (SSC) thereby being calculated as a function of said demand fulfilment time (DFT) in order to meet said specified target service level (TSL1, TSL2) and simultaneously minimize inventory levels in said plurality of distribution centres (M_DC, DC2, DC3, DC4), and

the computer being arranged for outputting orders to the plurality of distribution centres (M_DC, DC2, DC3, DC4) in said supply chain in due time based on said safety stock curve (SSC).

**20.** A computer program product being adapted to enable a computer system comprising at least one computer having data storage means in connection therewith to control a computer-implemented MRP planning system according to claim 19.

SC 100

| | SUP-PLIERS | SITES | DISTRI-BUTION | CUSTOMERS |
|---|---|---|---|---|
| 12-24 months | Budget and business review | | | |
| 3-18 months | Executive S&OP | | | |
| | Strategic procurement | Supply planning | | Demand Planning |
| 2-13 weeks | Purchasing | Master planning | | |
| | | Segmentation and inventory targets | | |
| 0-2 weeks | Call off/VMI | Production scheduling | Replenishment | Demand and promotion sensing |

FIG. 1

CD → COMP → RO
MD → COMP ↔ DB

EP 4 134 889 A1

SC 100:

FIG. 2A

EP 4 134 889 A1

FIG. 2B

FIG. 2C

SC 100:

FIG. 3

Weeks

|  | | 0 | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|---|---|---|---|---|---|---|---|---|---|---|---|---|---|
|  | DC 2 actuals | | 100 | 50 | 100 | 90 | 120 | 50 | 160 | 90 | 140 | 90 | 130 | 120 | 110 | 110 | 130 | 140 | 70 | 90 | 70 | 155 | 65 |
|  | M_DC actuals | | 140 | 60 | 80 | 60 | 110 | 90 | 150 | 120 | 130 | 120 | 120 | 80 | 130 | 90 | 80 | 110 | 90 | 130 | 110 | 80 | 90 |
| **Invention** | Supply DC 2 | | 0 | 0 | 500 | 0 | 0 | 0 | 0 | 0 | 500 | 0 | 0 | 0 | 500 | 0 | 0 | 0 | 500 | 0 | 0 | 0 | 0 |
|  | Stock DC 2 | 260 | 160 | 110 | 510 | 420 | 300 | 250 | 90 | 0 | 360 | 270 | 140 | 20 | 410 | 300 | 170 | 30 | 460 | 370 | 300 | 200 | 100 |
|  | Supply M_DC | | 0 | 900 | 0 | 0 | 0 | 0 | 900 | 0 | 0 | 0 | 900 | 0 | 0 | 0 | 0 | 900 | 0 | 0 | 0 | 900 | 0 |
|  | Stock M_DC | 580 | 440 | 780 | 700 | 640 | 530 | 440 | 1190 | 570 | 440 | 320 | 1100 | 520 | 390 | 300 | 220 | 510 | 420 | 290 | 180 | 980 | 380 |
| **Method 1** | Supply DC 2 | | 0 | 0 | 500 | 0 | 0 | 0 | 0 | 0 | 500 | 0 | 0 | 0 | 500 | 0 | 0 | 0 | 500 | 0 | 0 | 0 | 0 |
|  | Stock DC 2 | 260 | 160 | 110 | 510 | 420 | 300 | 250 | 90 | 0 | 360 | 270 | 140 | 20 | 410 | 300 | 170 | 30 | 460 | 370 | 300 | 200 | 100 |
|  | Supply M_DC | | 0 | 900 | 0 | 0 | 0 | 0 | 900 | 0 | 0 | 0 | 0 | 0 | 900 | 0 | 0 | 0 | 900 | 0 | 0 | 0 | 900 |
|  | Stock M_DC | 580 | 440 | 780 | 700 | 640 | 530 | 440 | 1190 | 570 | 440 | 320 | 200 | -380 | 390 | 300 | 220 | -390 | 420 | 290 | 180 | 80 | 380 |
| **Method 2** | Supply DC 2 | | 0 | 0 | 500 | 0 | 0 | 0 | 500 | 0 | 0 | 0 | 0 | 500 | 0 | 0 | 0 | 500 | 0 | 0 | 0 | 0 | 500 |
|  | Stock DC 2 | 260 | 160 | 110 | 510 | 420 | 300 | 250 | 590 | 500 | 360 | 270 | 140 | 520 | 410 | 300 | 170 | 530 | 460 | 370 | 300 | 200 | 600 |
|  | Supply M_DC | | 0 | 900 | 0 | 0 | 0 | 0 | 900 | 0 | 0 | 0 | 900 | 0 | 0 | 0 | 900 | 0 | 0 | 0 | 900 | 0 |
|  | Stock M_DC | 580 | 440 | 760 | 700 | 640 | 530 | -60 | 690 | 570 | 440 | 320 | 600 | 520 | 390 | 300 | -280 | 510 | 420 | 290 | 180 | 480 | 380 |

Stock out · Too early · Stock out · Too late · Stock out · Too early · Stock out · Too late

FIG. 4A

**Statistics over simulations**

| | SL at DC 2 | SL at M_DC |
|---|---|---|
| Target SL | 98,0% | 98,0% |
| Target Avg | 100 | 100 |
| Target CV | 30% | 30% |

| DC2 | | M_DC | | INVENTION | | | METHOD 1 | | | METHOD 2 | | |
|---|---|---|---|---|---|---|---|---|---|---|---|---|
| CV | Avg actuals | CV | Avg actuals | Avg stock at DC 2 | SL at DC 2 | SL at M_DC | Avg stock at DC 2 | SL at DC 2 | SL at M_DC | Avg stock at DC 2 | SL at DC 2 | SL at M_DC |
| 27% | 111 | 34% | 89 | 266 | 100,0% | 100,0% | 266 | 100,0% | 93,6% | 291 | 100,0% | 95,5% |
| 29% | 109 | 29% | 89 | 235 | 100,0% | 99,1% | 235 | 100,0% | 95,8% | 260 | 100,0% | 98,1% |
| 31% | 100 | 28% | 109 | 260 | 100,0% | 100,0% | 260 | 100,0% | 83,1% | 335 | 100,0% | 79,7% |
| 28% | 103 | 39% | 91 | 298 | 100,0% | 99,0% | 298 | 100,0% | 99,0% | 298 | 100,0% | 99,0% |
| 32% | 88 | 30% | 100 | 273 | 100,0% | 100,0% | 273 | 100,0% | 100,0% | 298 | 100,0% | 100,0% |
| 22% | 113 | 24% | 97 | 252 | 99,6% | 92,3% | 252 | 99,6% | 92,3% | 252 | 99,6% | 92,3% |
| 26% | 106 | 28% | 98 | 223 | 97,8% | 100,0% | 223 | 97,8% | 73,6% | 271 | 99,8% | 81,8% |
| 28% | 100 | 24% | 118 | 286 | 100,0% | 87,3% | 286 | 100,0% | 87,3% | 311 | 100,0% | 87,3% |
| 28% | 95 | 36% | 105 | 281 | 100,0% | 100,0% | 281 | 100,0% | 100,0% | 306 | 100,0% | 88,7% |
| 30% | 108 | 34% | 89 | 266 | 98,2% | 96,5% | 266 | 98,2% | 96,5% | 266 | 98,2% | 96,5% |
| 30% | 105 | 18% | 108 | 290 | 100,0% | 89,8% | 290 | 100,0% | 89,8% | 290 | 100,0% | 72,3% |
| 36% | 94 | 30% | 105 | 287 | 100,0% | 100,0% | 287 | 100,0% | 100,0% | 312 | 100,0% | 100,0% |
| 27% | 103 | 23% | 107 | 257 | 99,3% | 100,0% | 257 | 99,3% | 100,0% | 282 | 99,3% | 93,5% |
| 27% | 104 | 29% | 106 | 280 | 99,3% | 97,9% | 280 | 99,3% | 97,9% | 329 | 100,0% | 97,9% |
| 35% | 100 | 24% | 95 | 285 | 100,0% | 100,0% | 285 | 100,0% | 96,3% | 360 | 100,0% | 97,8% |
| 21% | 96 | 26% | 100 | 240 | 100,0% | 100,0% | 240 | 100,0% | 100,0% | 265 | 100,0% | 85,9% |
| 26% | 97 | 29% | 102 | 272 | 100,0% | 93,9% | 272 | 100,0% | 93,9% | 297 | 100,0% | 93,9% |
| 28% | 93 | 23% | 97 | 250 | 100,0% | 100,0% | 250 | 100,0% | 100,0% | 325 | 100,0% | 100,0% |
| 35% | 100 | 29% | 109 | 270 | 100,0% | 98,5% | 270 | 100,0% | 98,5% | 320 | 100,0% | 87,3% |
| 30% | 99 | 42% | 91 | 280 | 100,0% | 91,8% | 280 | 100,0% | 91,8% | 305 | 100,0% | 91,8% |
| 27% | 99 | 25% | 112 | 276 | 100,0% | 100,0% | 276 | 100,0% | 86,9% | 301 | 100,0% | 89,9% |
| 26% | 104 | 30% | 113 | 247 | 100,0% | 99,6% | 247 | 100,0% | 79,5% | 247 | 100,0% | 79,5% |
| 28% | 99 | 36% | 87 | 280 | 100,0% | 100,0% | 280 | 100,0% | 100,0% | 280 | 100,0% | 100,0% |
| 31% | 93 | 34% | 94 | 283 | 100,0% | 82,3% | 283 | 100,0% | 100,0% | 283 | 100,0% | 82,3% |
| 32% | 99 | 30% | 101 | 296 | 100,0% | 100,0% | 296 | 100,0% | 88,4% | 321 | 100,0% | 100,0% |
| 27% | 95 | 41% | 89 | 302 | 100,0% | 100,0% | 302 | 100,0% | 100,0% | 327 | 100,0% | 96,0% |
| 34% | 101 | 29% | 98 | 280 | 98,7% | 96,3% | 280 | 98,7% | 88,2% | 328 | 100,0% | 93,2% |
| 29% | 101 | 27% | 103 | 276 | 99,4% | 100,0% | 276 | 99,4% | 82,9% | 326 | 100,0% | 100,0% |
| 26% | 106 | 32% | 98 | 276 | 100,0% | 88,7% | 276 | 100,0% | 88,7% | 301 | 100,0% | 88,7% |
| 29% | 100 | 29% | 104 | 273 | 100,0% | 86,8% | 273 | 100,0% | 86,8% | 298 | 100,0% | 84,6% |
| 25% | 101 | 28% | 93 | 257 | 97,6% | 86,2% | 257 | 97,6% | 67,6% | 279 | 100,0% | 86,2% |
| 32% | 93 | 37% | 94 | 280 | 100,0% | 100,0% | 280 | 100,0% | 100,0% | 305 | 100,0% | 95,8% |
| 28% | 106 | 36% | 87 | 249 | 100,0% | 95,5% | 249 | 100,0% | 90,7% | 274 | 100,0% | 90,9% |
| 27% | 111 | 35% | 108 | 243 | 99,8% | 98,2% | 243 | 99,8% | 81,4% | 293 | 100,0% | 71,0% |
| 29% | 101 | 30% | 100 | 270 | 99,7% | 96,5% | 270 | 99,7% | 92,1% | 298 | 99,9% | 91,1% |

FIG. 4B

FIG. 5A

SC 100:

FIG. 5B

EP 4 134 889 A1

Example of safety stock curve and buffer curve

FIG. 5C — Safety stock curve — Buffer curve

24

SC 100:

FIG. 6

EP 4 134 889 A1

SC 100:

Fig. 7

EP 4 134 889 A1

SC 100:

Fig. 8

SC 100:

Fig. 9

SC 100:

Fig. 10

EP 4 134 889 A1

S1 → S2 → S3 → S4

Fig. 11

Europäisches
Patentamt

European
Patent Office

Office européen
des brevets

# EUROPEAN SEARCH REPORT

**Application Number**

EP 21 19 0814

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/066859 A1 (OCADO INNOVATION LTD [GB]) 6 May 2016 (2016-05-06) * page 13, lines 8-20; figure 4 * ----- | 1-20 | INV. G06Q10/08 |

TECHNICAL FIELDS
SEARCHED      (IPC)

G06Q

The present search report has been drawn up for all claims

| Place of search | Date of completion of the search | Examiner |
|---|---|---|
| Munich | 18 January 2022 | Flores Sanchez, L |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 19 0814

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2022

| Patent document cited in search report | | Publication date | Patent family member(s) | | Publication date |
|---|---|---|---|---|---|
| WO 2016066859 | A1 | 06-05-2016 | CA | 2966075 A1 | 06-05-2016 |
| | | | EP | 3213275 A1 | 06-09-2017 |
| | | | GB | 2533846 A | 06-07-2016 |
| | | | IL | 251907 A | 31-08-2020 |
| | | | JP | 6651517 B2 | 19-02-2020 |
| | | | JP | 2017534990 A | 24-11-2017 |
| | | | KR | 20170078722 A | 07-07-2017 |
| | | | US | 2017323250 A1 | 09-11-2017 |
| | | | WO | 2016066859 A1 | 06-05-2016 |
| | | | ZA | 201702979 B | 28-11-2018 |

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070192213 A

**Non-patent literature cited in the description**

- Inventory Control by Sven Axsater. Springer Science+ Business Media, 2006